# EUROPEAN PATENT APPLICATION

(11) **EP 3 348 613 A1**
(43) Date of publication of application: **18.07.2018**
(21) Application number: 18150718.7
(22) Date of filing: 09.01.2018
(51) Int. Cl.: C08K 3/34

(54) **WATER BASED SILICONE COATING COMPOSITIONS**

(30) Priority: 11.01.2017 US 201715403315
(71) Applicant: Hamilton Sundstrand Corporation, Windsor Locks, CT 06096-1010 (US)
(72) Inventor: POTEET, Steven, 06518, CT Connecticut Hamden (US); GAGE, Marc E., Feeding Hills, MA Massachusetts 01030 (US); GRULKE, David J., Tolland, CT Connecticut 06084 (US)
(74) Representative: Dehns

(57) **Abstract**

A high temperature coating includes a silicone resin, a mass of nanoclay particles dispersed in the silicone resin, a surfactant and water.

## Description

### BACKGROUND

Exemplary embodiments pertain to the art of coatings and, in particular, to coatings that can be utilized in high-temperature applications such as heat exchangers.

Silicone resins are known to demonstrate endurance towards environmental conditions such as weathering and extreme heat and cold. For this reason these resins have been found to be particularly useful in the paint industry. Previously, silicone resins were made available to formulators in organic solutions. In particular, the resin consisted of so many parts by weight of silicone solids in an organic solvent such as xylene or toluene. However, due to increased concerns regarding: the suspected health hazards to persons exposed to such solvents; environmental considerations and the mandatory use of costly and burdensome pollution abatement procedures and equipment; and escalating costs for organic materials, the use of such organic solvents has been discouraged. As a result, suppliers of these silicone resins have worked towards developing silicone resin systems that are water based and therefore not dependent upon organic solvents.

One possible approach that has been provided to overcome one or more of the above noted issues is to provide coating compositions of the present invention that contain a silicone resin emulsion; a non-water reactive filler material having a laminar structure; a water soluble nonionic surfactant; and water. In such a solution, the filler material may be an aluminum leaf.

For devices such as high temperature aluminum heat exchangers which have an intricate network of passages therethrough and which are oftentimes subjected to corrosive environments, the deficiencies of prior art water based coating compositions take on significant proportions.

Accordingly, a water based silicone coating compositions that offers superior coating properties and resistance to high temperatures would be well received. Further, coating compositions that exhibit durability and resistance to the effects of a corrosive environment would also be well received.

### BRIEF DESCRIPTION

Disclosed is a high temperature coating. The coating includes a silicone resin, a mass of nanoclay particles dispersed in the silicone resin, a surfactant and water.

Also disclosed is a method of forming a high temperature coating that includes a silicone resin, a mass of nanoclay particles dispersed in the silicone resin, a surfactant and water. The method includes: blending water and the surfactant; adding the mass of nanoclay particles to the blended water and surfactant; sonicating the combination of the nanoclay particles to the blended water and surfactant to form a dispersion; forming a letdown that includes the silicone resin; and combining the dispersion and the letdown.

Further disclosed is method of coating an article. The method includes: forming a high temperature coating that includes a silicone resin, a mass of nanoclay particles dispersed in the silicone resin, a surfactant and water and applying the coating to the object. The coating is formed by: blending water and the surfactant; adding the mass of nanoclay particles to the blended water and surfactant; sonicating the combination of the nanoclay particles to the blended water and surfactant to form a dispersion; forming a letdown that includes the silicone resin; and combining the dispersion and the letdown

### DETAILED DESCRIPTION

A detailed description of one or more embodiments of the disclosed apparatus and method are presented herein by way of exemplification and not limitation.

The term "about" is intended to include the degree of error associated with measurement of the particular quantity based upon the equipment available at the time of filing the application. For example, "about" can include a range of ± 8% or 5%, or 2% of a given value.

In general, the coating compositions of the present invention contain a silicone resin emulsion; nanoclay particles dispersed within the silicon resin; a water soluble nonionic surfactant; and water.

The silicone resin emulsion functions as a high heat resistant binder for the nanoclay particles. In one embodiment, the emulsion has a total silicone resin solids content of approximately 35-70% by weight and in another 40-60% by weight. In one embodiment, the emulsion has a total silicone resin solids content of approximately 48-52% by weight.

The silicone resin emulsion may be comprised of 100 parts by weight of (i) at least one silicone resin having one or more organic side groups attached such as phenyl, methyl, trifluoropropyl and/or vinyl moieties; (ii) a nonionic emulsifier effective for dispersing the resin in a water based emulsion and for binding the resin or particulate phase and the water or continuous phase; and (iii) an amount of water effective for providing a preselected silicone resin solids content by weight of the emulsion. The emulsion might also contain trace amounts of volatile organic compounds such as xylene and/or toluene present as a result of the manufacturing process.

Silicone resins, which may be used in the emulsion of the present inventive coating composition, include optionally crosslinked resins comprising units selected from the group consisting of Rₓ SiO_{y} where x is 3, 2 or 1 and y is 0.5, 1.0 or 1.5 respectively, and where the R groups are phenyl, methyl, trifluoropropyl and/or vinyl. A typical number average molecular weight and weight average molecular weight of such resins are 420 and 2190, respectively. Preferred silicone resins include lightly crosslinked or soft phenylmethyl silicone resins and moderately to highly crosslinked or medium-hard phenylmethyl silicone resins. The most preferred silicone resin is medium-hard phenylmethyl silicone resin where an increase in the hardness and fluid resistance of the cured inventive coating composition has been observed when this moderately to highly crosslinked resin is used.

It will be recognized by those skilled in the art that the water used in the silicone resin emulsion of the present inventive coating may be distilled or deionized water.

The preferred silicone resin emulsion is commonly referred to as Silres Resin MP50E but other resins may be utilized.

The non-water reactive filler material of the present inventive coating has a particle structure and functions to form a barrier from corrosive elements thereby protecting the substrate and serves to improve coating properties. Filler materials contemplated by the present invention include nanoclays that include nano-sized clay particles. The particles are less than about 100 nm in diameter in one embodiment, less than about 50nm in another and less than about 30nm in yet another. In such an embodiment, the particles may be about 1-4 nm in height. In another embodiment, nanoclay particles have a diameter of less than 25 µm. Examples of materials having particles that may meet one or both of the above requirements include Bentonite. Another example of a composition that may meet one or both of the above requirements is Laponite RD®, which is a synthetic hectorite having clay platelets of about 30 nm in diameter and 1-4 nm in height.

The surfactant of the present inventive coating composition improves the wetting of the coating composition thereby helping nanoclay dispersion and inhibiting foam. These surfactants are also useful for reducing surface tension in the coating. Examples of suitable surfactants are acetylenic glycol, octylphenol ethoxylate, as well as many other surfactants which are well known in the coatings art. An example of such a surfactant an ethoxylated low-foam wetting agent (100% active liquid; HLB: 13) referred to as Surfynol 465 that is an ethoxylated acetylenic diol.

The preferred coating composition of the present invention comprises from 0.1% to 5.0% or more particularly from 0.2% to 2.0% and even more particularly from 0.5% to 1.5% of the mass of the coating formed is comprised of the nanoclay particles.

In prior coatings that contained the aluminum leaf in the silicone, the fragile nature of the leaf limited the force that could be asserted while mixing the solution. Use of the nanoclay particles described herein may reduce or eliminate such limitations and permit the use of high shear mixing or sonication to be used to mix the coating. In addition to the above components, the present inventive coating composition may advantageously contain some or all of the following ingredients, including rheological modifiers, antifoams, pH buffers, anti-rust agents, biocides, fungicides, antifreeze agents, etc.

In preparing the coating composition of the present invention, water and surfactant are blended together and the surfactant is allowed to dissolve for at least thirty (30) minutes. A filler material is then added to the resulting water solution. Dispersion of the filler material in the water solution is achieved by sonication. Sonication is the act of applying sound energy to agitate particles in a sample, for various purposes. The sonication can occur above 20 kHz in one embodiment and is performed at about 40 kHz in a specific embodiment and may occur for about 20 minutes. The combination of the water, surfactant and filler is referred to herein as the "dispersion."

This is followed by ensuring that the filler material is completely covered by the water solution and allowing the filler material to fully disperse by soaking for approximately 24 to 72 hours.

In a separate container, a letdown is created. The letdown is prepared by blending a silicone resin emulsion and water for approximately 15 to 20 minutes. The letdown is allowed to fully dissolve for approximately 24 to 72 hours. The dispersion is then added to the letdown and thoroughly blended. In contrast to prior coatings, the blending may occur by sonication or a high shear mixing (or both) of the letdown and the dispersion. The prior art aluminum filler material could not withstand either sonication or a high shear mixing without the aluminum leaves being damaged. Herein, high-shear mixer or high shear mixing process uses a rotating impeller or high-speed rotor, or a series of such impellers or inline rotors, usually powered by an electric motor, to "work" the fluid, creating flow and shear.

The resulting admixture is then allowed to fully disperse for at least 24 hours prior to application. In operation, the blended solution may be applied onto a metal substrate. The application may be from 0.1mil to 0.5mil thick. The substrate can be aluminum, an aluminum alloy or a conversion coated aluminum alloy to name but a few. The substrate is part of aircraft heat exchanger in one embodiment. It shall be understood that in one embodiment the coating is cured on the substrate for 1 hour at 450 degrees F. Application can be achieved by several techniques including: Flooding techniques, tube lining techniques, immersion techniques or spraying techniques.

A Summary of Examples is provided below. The numbers to the right of the components represent example weights in grams. In the table, the silicone resin is 50% silicone by weight but that is not required. Thus, for example, in example A, 0.124 g of Laponite is 0.5% of the silicone (24.850g) in the final product that has a mass of 88.80g. Other percentages such as 60 and 40 or any percent in between could also be used.

**Summary of Examples**

| | **Component** | **A** | **B** | **C** | **D** | **E** | **F** |
|---|---|---|---|---|---|---|---|
| | Water | 11.30 | 11.30 | 11.30 | 11.30 | 11.30 | 11.30 |
| **Dispersion** | Surfactant (Surfynol® 465) | 0.60 | 0.60 | 0.60 | 0.60 | 0.60 | 0.60 |
| | Laponite RD® | 0.124 | 0.2484 | 0.3726 | - | - | - |
| | Bentonite nanoclay | - | - | - | 0.124 | 0.2484 | 0.3726 |
| **Letdown** | Silicone Resin | 49.700 | 49.700 | 49.700 | 49.700 | 49.700 | 49.700 |
| | Water | 27.000 | 27.000 | 27.000 | 27.000 | 27.000 | 27.000 |
| | Triadine (optional) | 0.080 | 0.080 | 0.080 | 0.080 | 0.080 | 0.080 |
| **Loading Levels** | Mass | 88.80 | 88.93 | 89.05 | 88.80 | 88.93 | 89.05 |
| | %nanoclay by mass silicon | 0.50% | 1.00% | 1.50% | 0.50% | 1.00% | 1.50% |
| | g silicone | 24.850 | 24.850 | 24.850 | 24.850 | 24.850 | 24.850 |

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A high temperature coating, the coating comprising:
a silicone resin;
a mass of nanoclay particles dispersed in the silicone resin;
a surfactant; and
water.

2. The high temperature coating of claim 1, wherein the nanoclay particles are between 0.1%-5.0% by mass of the amount of silicone in the coating.

3. The high temperature coating of claim 2, wherein the nanoclay particles are between 0.50%-1.5% by mass of the amount of silicone in the coating.

4. The high temperature coating of claim 1, wherein the nanoclay particles are between 0.2%-2.0% by mass of the amount of silicone in the coating.

5. The high temperature coating of any preceding claim, wherein the silicone resin is about 50% silicone by weight.

6. The high temperature coating of any preceding claim, wherein the silicone resin is between about 40% and 60% silicone by weight.

7. The high temperature coating of any preceding claim, wherein the nanoclay particles have a diameter of less than about 100nm.

8. The high temperature coating of claim 7, wherein the nanoclay particles have a diameter of less than about 50nm.

9. The high temperature coating of claim 8, wherein the nanoclay particles have a diameter of less than about 30nm.

10. The high temperature coating of claim 5, wherein the nanoclay particles have a height between 1nm and 4 nm.

11. The high temperature coating of any preceding claim, wherein the nanoclay particles have a diameter of less than about 25 µm.

12. A method of forming a high temperature coating that includes a silicone resin, a mass of nanoclay particles dispersed in the silicone resin, a surfactant and water, the method comprising:
blending water and the surfactant;
adding the mass of nanoclay particles to the blended water and surfactant;
sonicating the combination of the nanoclay particles to the blended water and surfactant to form a dispersion;
forming a letdown that includes the silicone resin; and
combining the dispersion and the letdown.

13. The method of claim 12, wherein the dispersion and the letdown are combined by sonication.

14. The method of claim 13, wherein the dispersion and the letdown are combined by high shear mixing and being sonicated.

15. The method of claim 12, wherein the dispersion and the letdown are combined by high shear mixing.
